# EUROPEAN PATENT APPLICATION

(11) **EP 1 134 955 A1**
(43) Date of publication of application: **19.09.2001**
(21) Application number: 00105663.9
(22) Date of filing: 17.03.2000
(51) Int. Cl.: H04L 29/12, H04L 29/06

(54) **Enterprise network management using directory containing network addresses of users and devices providing access lists to routers and servers**

(71) Applicant: Reid, William J., Dallas, Texas 75248 (US)
(72) Inventor: Reid, William J., Dallas, Texas 75248 (US)
(74) Representative: Wagner, Karl H., Dipl.-Ing.

(57) **Abstract**

An enterprise network using a wide area network (WAN), and having routers and servers, uses a master directory to determine access rights, including the ability to access the WAN through the routers and the ability to access the server over the WAN.

## Description

### Field of the Invention

The present invention relates to computer networks for managing enterprise network access and providing enterprise network security.

### Background of the Invention

The marketplace for many companies has expanded from a national to a world marketplace. Large international companies have expanded into global companies and smaller companies have become international competitors. This market expansion has been driven by technology that has made both voice and data communication easier.

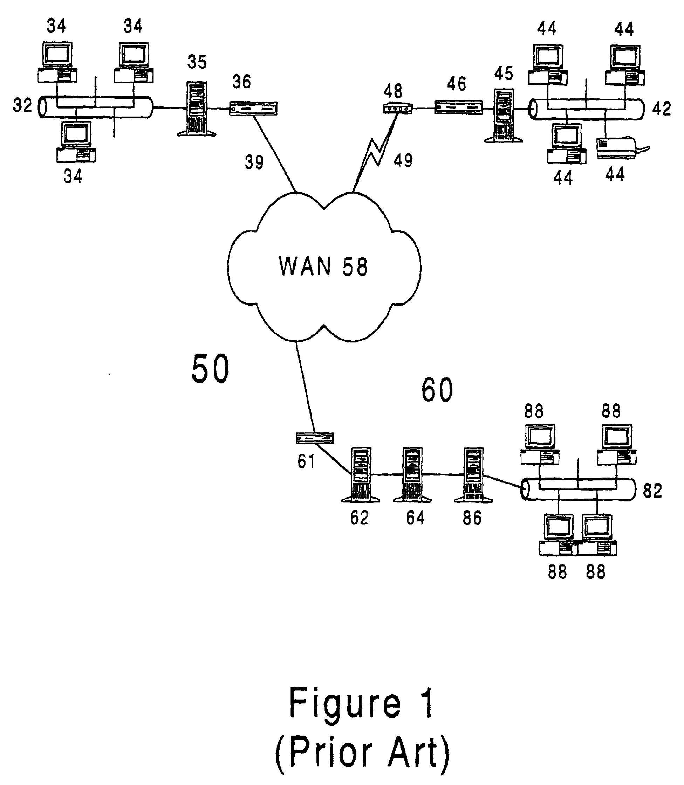

Figure 1, generally at 50, shows a prior art system that distributed or remote users currently may use to communicate with a central or home networks. The remote network 32 has remote users 34 that communicate through a wide-area network (WAN)58 to a company or home network 82. WAN 58 may include dedicated or non-dedicated network links. A typical dedicated network would include frame relay network elements and a typical non-dedicated network would include a TCP/IP network elements in a public network such as the Internet.

Remote users can communicate with WAN 58 in a number of different ways. As shown in Figure 1, users 34 are part of a local network 32 that connects to the WAN 58 through a server 35 and router 36 and a dedicated local loop 39. Users 44 are part of a local loop 42 that connects to WAN 58 through server 45, router 46 and modem 48 that uses a public switched network (PSTN) 49. Local loop 39 and public switched circuit 49 connections normally are provided by a local exchange carrier (LEC) such as Southwestern Bell or Bell Atlantic.

Home network 60, shown in FIGURE 1, has a router 61, firewall 62,destination server 64 and a Local Area Network (LAN) 84 with a LAN server 86 and a number of workstations 88. There can be many LANs, servers, and other resources in the company or home network, including fax servers, printers, file servers, and database servers.

Firewall 62 is either a device or an application that controls the access between internal trusted LAN 84 and external public non-trusted networks such as the Internet or a PSTN. Firewall 62 tracks and controls communication, deciding where to pass, reject, encrypt, or log communications, and requires that these communications adhere to a defined security policy. Firewall 62 normally functions in four areas: access control; authentication; optional encryption/decryption; and routing. Firewalls manufactured by Check Point Software Technologies Ltd. and Raptor Systems, Inc. each have these capabilities.

Access control is the firewall mechanism to grant access to a class of users or to a class of users that use specific protocols, such as HTTP (the Internet access protocol). Access control is established by setting up user definitions, server and gateway definitions, and establishing protocols. Access control in a firewall is rule-based in that a security rule defines the relationship between the definitions.

Authentication is a mechanism to verify the authenticity of both the sender and the message. Broadly, authentication may encompass three types of technology: (1) password based; (2) token based; and (3) biometric. Authentication grants access privileges to specific users to access specific network resources and/or specific network applications.

Encryption/decryption is an optional mechanism to transform a message so that the encrypted message can only be read with the aid of same additional information (a key) known to the sender and the intended recipient alone. In secret key encryption, the same key is used to encrypt a message and then to decrypt it. In public key encryption, two mathematically related keys are used, one to encrypt the message and the other to decrypt the message.

Routing is a firewall mechanism to determine which network resource(s) should receive the message. In a typical firewall, a user, or user groups, can be routed to one or more destinations on the basis of certain rules. Because these rules require set-up and maintenance, the routing is typically controlled with broad rules for large groups of people systems.

Firewalls are installed to address the threats of hostile external network intrusion but have limited abilities to reduce or eliminate internal network vulnerabilities or social engineering attacks as discussed below. Firewalls are generally rules based products where a typical rule may be "Marketing users can get to the Internet Server only with HTTP".

### Network Management

An enterprise network is a network for an enterprise, including multiple LANs, routers and servers, typically geographically separated. The networks of the Enterprise network can be connected together over a wide area network. Enterprise network management that has evolved from the mainframe environment is still centered mainly on the operating systems and is mostly manual and resource intensive.

Numerous tools have been developed to aid in network management. Routers are normally configured and managed with a Telnet tool. Telnet also is used for remote control of firewalls, and servers. Simple Network Management Protocol (SNMP) is used to manage network nodes and to monitor operation. Servers are generally manually configured with users manually coded into a user control program. Other tools include capacity planning, fault management, network monitoring, and performance measurement.

A router or routing/switching device is used in enterprise networks to route user messages and files to and from internal LAN 82 and an external WAN 58. The routing device can recognize that the user workstation 88 has issued a destination address not located on LAN 82 for a message or for a file transfer and, therefore, that the message or file needs to be forwarded to external WAN 58. Similarly, the routing device can recognize a destination address on WAN 58 for resources on its internal LAN 82, and therefore the device will forward that WAN 58 message or file to the internal network served by the router 61.

An analogy to this data network routing is the operation of the PSTN (Public Switched Telephone Network). When a seven-digit number is dialed, if the first three digits are a valid local exchange, the call will remain in the local exchange. Similarly, when the NetID of destination IP address is the same as the NetID of the local network the data packets will remain on the LAN. If a ten-digit number is dialed, if the first three digits are for a valid area code, the call will be routed to the long distance network. Similarly, when the NetID of a destination IP address is different from the NetID of the local network, the data packets will be forwarded to the WAN.

Routing devices generally use one or more methods for obtaining routing instructions. First, routers have static routing instructions that are manually coded into the routing instructions. This manual coding may be by user interaction with a router operating system, such as Cisco IOS, or by downloading the coding over the network through Telnet or SNMP. Second, the router may learn routing instructions through routing protocols such as RIP or IGRP. These protocols communicate with other routers on the network and share routing information.

Computers with network interfaces and special multi-user software are used as LAN and WAN servers. A LAN server 84 may often be called a file server. While a server may often be considered a physical device in general, a server is a computer program that provides services to other computer programs in the same or other computers. Examples of network servers are WINS (Windows Internet Naming Server), DNS (Domain Name Server) and DHCP (Dynamic Host Control Protocol) server, Internet Application server, firewall server, Internet server and Intranet server.

### Security

As enterprise-wide data networks have expanded, the need for network security has increased. Firewall and encryption technologies, as described in the prior art, have been developed to address some of the network security needs. However, the majority of network security problems is not being addressed by current technological solutions.

For remote networks, shown as networks 32 and 42 in FIGURE 1, the routers 36 and 46 are often programmed to accept 16,384 devices addresses as valid, allowing connection to the internal networks 42 and 52 even though there are only 4 devices in network 32 and 5 devices in network 42, This large addressee space is programmed because it is difficult and time consuming to program the routers to the actual devices in these networks as the number of such devices change. So in terms of security, there is over 3000 times (16,384 addresses \ 5 actual addresses required) more opportunity to illegally penetrate the networks than is necessary. Router address space is normally contiguous, again for ease of network management, even though users come and go from the networks such that IP address actually being used is not contiguous.

For servers 35, 45, 62, 64, and 66 in Figure 1 the user access is controlled by access control lists (ACLs). In these servers individual users are combined into groups (for instance, Bob Rogers could be part of the Marketing Group). Bob Rogers could then only access files that the ACL for that file contained "Marketing Group." Because it is difficult and costly to develop ACLs in each server, most files have access restricted to "Everybody" or "Guests", so server access is available to everyone.

The largest reported losses in network security come from internal theft and sabotage. Internal networks are normally open so that many users have root level control, which allows operators to do everything on servers including copying files, planting viruses, and erasing all information. Disgruntled employees can take advantage of such an open network to perform illegal acts.

The next largest reported loss is referred to as "social engineering." Social engineering uses social interaction with inside employees to obtain network access information. Covert social engineering actives are typically undertaken when significant theft or espionage is planned, so it normally results in substantial losses.

The other area of reported losses is hostile external network intrusion. A firewall is useful for protecting a network in this area. In general, a firewall is useful for protecting networks from people unknown to the company but most losses and network threats come from people known to the company.

### Directory Services

Directory services products are generally focused on either LAN or WAN environments. The largest installed base of directory services is Novell's NDS (NetWare Directory Services) with over 10 million units installed. NDS is a product focused primarily at the LAN level and used to provide computer workstations 88 with access to shared resources such as files servers or printers in a LANs 32, 42 and 82. The Novell product and other similar directory products are proprietary from product manufacturers and are not under the management of any open standards body.

One enterprise level directory technology (X.500) has been used to integrate phone directory information, e-mail, and fax addressing across an enterprise. A directory is a open standard database providing distributed, scalable, client/server-based repositories of data that are read much more frequently than modified (for example, user definitions, user profiles, and network resource definitions). Users applications can access these directories through directory access protocols (DAPs). In network environments, exemplary DAPs include X.500 directory access protocols and Lightweight Directory Access Protocol (LDAP).

X.500 is a directory service defined by a set of international standards published jointly by the International Standards organization (ISO) and the International Telecommunications Union (RFC, formerly CCITT) standards bodies. Originally developed in 1988 to be a general e-mail directory, the standards have developed to envision a general global information service. Directory services have been applied, as the name implies, to provide users with a directory of available services.

LDAP is short for Lightweight Directory Access Protocol, a set of protocols for accessing information directories. LDAP is based on the standards contained within the X.500 standard, but is significantly simpler. However, unlike X.500, LDAP supports TCP/IP, which is necessary for any type of Internet access. The Internet is being defined and specified by the Internet Engineering Task Force (IETF) with LDAP being defined and specified by a series of formal IETF Request for Changes (RFCs). Like other Internet capabilities LDAP has multiple meanings in different contexts. LDAP servers are fully functional directories that can be accessed by LDAP clients using the protocol defined by LDAP.

### Architectural View of Directories

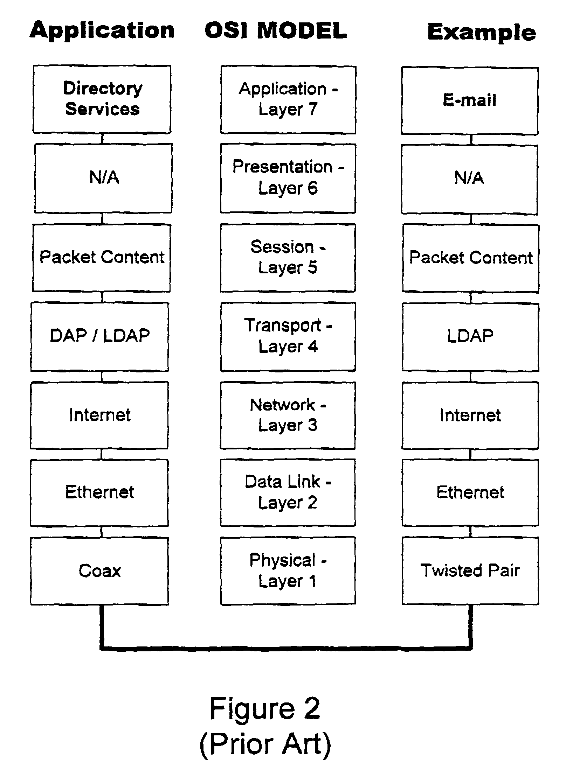

FIGURE 2 is a prior functional diagram showing the relationship between the directory services and the ISO model network layers. The top ISO networking layer is an application, such as word processing, fax or e-mail. The bottom layer of the ISO model is the physical layer, such as a twisted-pair of wire or fiber optic cable. Current directory services are an application program that works to manage other application layer programs such as e-mail phone directories and faxing.

FIGURE 2 shows the OSI (open system interconnect) reference model that describes a communications in the seven hierarchical layers that are shown. Each of these layers provides services to the layer above and invokes services from the layer below. Typically, end users of the communications system interconnect to the application layer, which may be referred to as a distributed operating system because it supports the interconnection and communication between end users that are distributor. The OSI model allows the hiding of the difference between locally connected and remotely connected end users, so the application layer appears as a global operating system. Normally, in a distributed operating system, the global supervisory control for all of the layers resides in the application layer.

Each of the layers contributes value to the communications system. The application layer uses the presentation layer, and is concerned with the differences that exist in the various processors and operating systems in which each of the distributed communications systems is implemented. The presentation service layer uses the session layer, and manages the dialogue between two communicating partners. The session layer assures that the information exchange conforms to the rules necessary to satisfy the end user needs. The session layer uses the transport layer, and creates a logical pipe between the session layer of its system and that of the other system. The transport layer uses the network layer to create a logical path between two systems. The transport layer is responsible for selecting the appropriate lower layer network to meet the service requirement of the session layer entities. This connection is generally though of as a point-to-point connection. The network layer uses the data link layer, and establishes a connection between the entities and this is based on a protocol for the connection. The data link layer uses the physical layer. The data link layer is responsible for building a point-to-point connection between two system nodes that share a common communication system. The data link layer is only aware of the neighboring nodes on a shared channel. Each new circuit connection requires a new link control. The physical layer is responsible for transporting the information frame into a form suitable for transmission onto a medium.

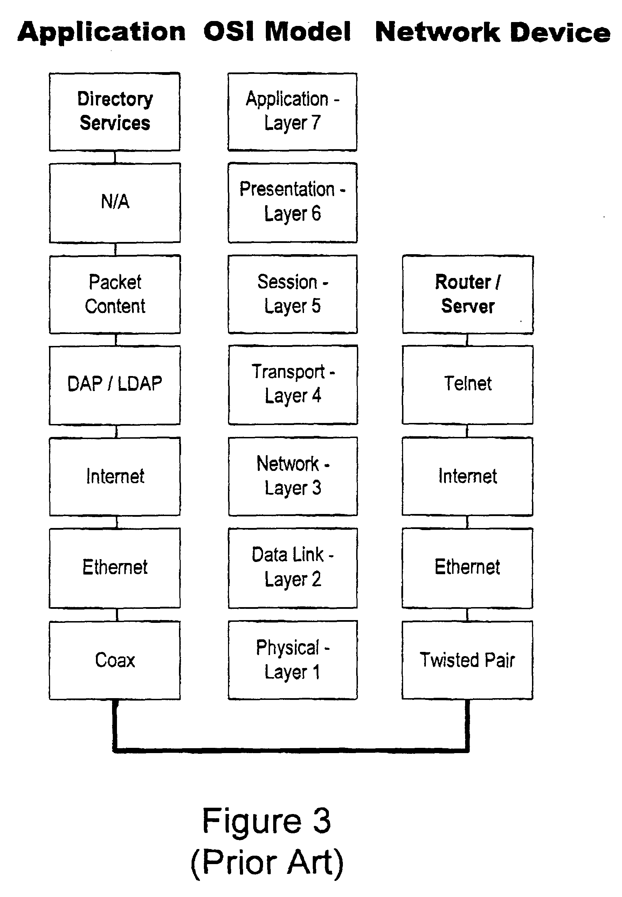

FIGURE 3 is a functional block diagram showing the positioning of directory services and network devices, such as routers and servers, on the ISO network layers. The protocol originally developed for the directory services application to communicate with other applications, like e-mail, was DAP. Recently the LDAP protocol was defined at the network layer to allow communication between servers, routers, firewalls and other network level devices.

For an application (ISO Layer 7) to have a unique operation at the lower layers, such as a device operating at the Session Layer (ISO Layer 5) level, application programs are required to add the specific functionality between these layers.

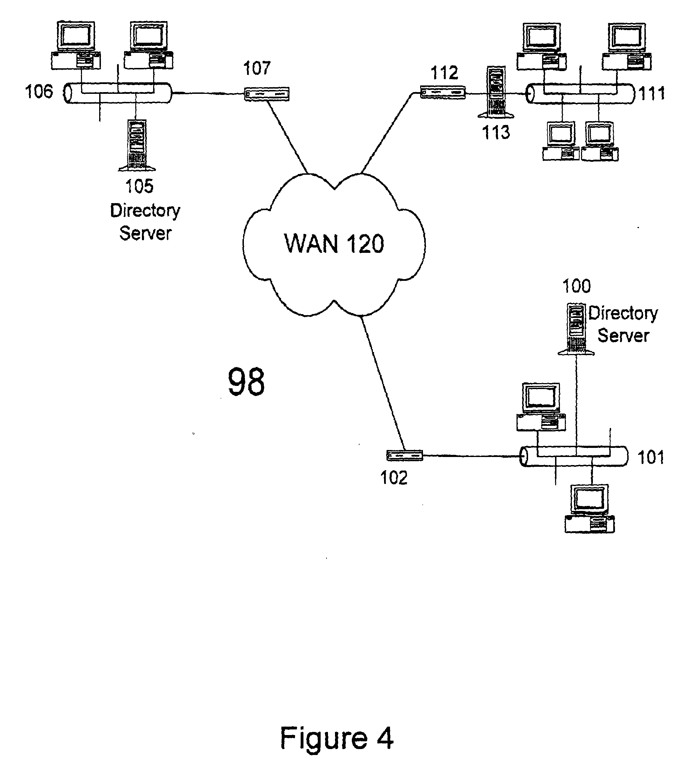

FIGURE 4 is a functional block diagram showing how a application could access information from directory services and send that information to a router or server operating at Layer 5 using Telnet or FTP as the protocol, for example. Similarly, in FIGURE 4, an application in a router or server could send and retrieve information to or from directory services using the LDAP protocol.

### Summary of the Invention

The present invention extends the concept of directory services to the management and control of enterprise networks by integrating directory technology, router/gateway management, and server management to form an enterprise network management and network security solution. By integrating directory services to perform these extended functions, a firewall can be deleted or omitted and a stronger implementation of firewall functions be integrated into other network elements, and, can controlled by a master directory. From an architectural standpoint, the present invention provides supervisory control in the network and data link layers, rather than in the application layers as such control is traditionally provided.

An enterprise directory residing on a directory server stores the names, workstations, router/gateways, servers, IP addresses locations, passwords, and encryption keys for individuals. Periodically, the directory server downloads to each router/gateway across the WAN router/gateway access lists (RALs), thereby controlling all network access across the WAN. Also periodically, the directory server downloads user control files to servers in the network, thereby controlling all server access across the WAN. This directory-based invention thus provides enhanced network control, and enhanced network security.

### CONCEPT OF THE INVENTION

An enterprise directory residing on a directory server stores the names, workstations, router/gateways, servers, IP addresses, locations, passwords, and encryption keys for individuals. Periodically, the directory server downloads to each router/gateway across the WAN router/gateway access lists (RALs), thereby controlling all network access across the WAN. Also periodically, the directory server downloads user control files (UCFs) to servers in the network, thereby controlling all server access across the WAN. This directory-based invention thus provides enhanced network control, and enhanced network security.

The directory uses the concepts of objects and object attributes. The users, router/gateways, and servers are objects. The IP address, password, privileges, and location are attributes of each user, server, and router/gateway. Another attribute of each router/gateway is the RAL. The RAL defines the operation of the router/gateway (i.e., defines which IP addressees will be routed to which designation). Because the directory knows the location and IP address of each user, and the location and IP address of each router/gateway, a directory application can periodically populate the RAL in each router/gateway on the network using LDAP. Entries in the directory thereby control the entire network and the network router/gateway configuration management is automated.

Network servers can be both physical and logical devices. A physical server located in an accounting department may contain a number of logical servers such as payroll, accounts receivable, accounts payable, etc. Access to these logical servers is controlled by user authentication and user privileges contained in the UCF on that server. The directory contains both the users and servers as objects. Directory user attributes include the authentication criteria and privileges for each server in the network. Directory attributes for each server includes the name of the UCF and the UCF contents. A directory application would periodically populate the UCFs in each server with the directory user information. Entries in the directory then control to all servers across the enterprise.

Because the user and user server access are tightly coupled and easily managed in the directory, the company can greatly restrict root level access, which typically allows server files to be modified, deleted, or copied. Such access is a major target for disgruntled employees. The ability to instantly change users and user access control directly affects the greatest source of network loss for many corporations. Passwords are a user attribute in the directory. Because the user and user passwords are tightly coupled and easily managed in the directory, the company can easily automate a password control program. The directory also manages e-mail, so the new password can be automatically distributed by secure e-mail. Effective password management can aid in reducing the second greatest network threat of security loss, i.e., loss due to social engineering.

Hostile external intrusion is the third area of network security. The present invention can replace the user authentication function of the firewall with the distributed user authentication directory services. Each router/gateway in the system will pass information only for the designated users. Logical servers have authentication services specific to that server. That individual server authentication can be password, token, or biometric. This distributed authentication provides greatly enhanced security over a firewall-protected network.

The present invention provides access control by directory management of RALs, and also provides user authentication capabilities that are associated with server access lists. The methods and means for authentication are currently by Microsoft NT servers or Sun Microsystems servers. This server-based authentication is generally adequate for small networking environments but may not be adequate for large enterprise networks.

To define enhanced security greater that the current server-based security, this invention uses certificates defined with the public key structure of X-509. X-509 is a subset of X-500 so that the X-509 public key structure is an integral part of the X-500 and LDAP directories.

Certificates are a strong user authentication concept, exceeding firewall authentication, and can be integrated into directory services. Certificates represent flexible enabling technology, which allows clients and servers to authenticate themselves to each other, and set up an encrypted channel for the duration of a communication session. Certificates can be used to secure the communication link, the user identity, the integrity of data and confidentiality of the information. A corporation can issue certificates to its employees, contractors, customers, suppliers, and other business partners. These certificates can then be used to grant/deny access to sensitive network resources on the WAN.

A certification authority (CA) is a third-party authority responsible for issuing certificates to identify a community of individuals, systems or other entities that make use of a computer network. By digitally signing the certificates it issues, the CA vouches for the identity and trustworthiness of certificate owners. Network users possess the CA's own, self-signed public key certificate (often referred to as the "root key"), and use it to verify other users' certificates. In doing so, they have assurance that others are who they say they are, and know that the CA (whom they recognize and trust) vouches for them.

The invention integrates the directory attributes of public/private keys associates the keys with employees, vendor, and customer directory objects to provide a level of security and protection unavailable in prior art. By providing such general and generic control of enterprise security, the present invention allows the directory to define security policy on a user basis, whether this user is internal or external to the network, and provides as many options as there are users times the number of network controllable elements.

### BRIEF DESCRIPTION OF THE DRAWINGS

FIGURE 1 illustrates a prior art network.

FIGURE 2 illustrates a prior art architectural block diagram.

FIGURE 3 illustrates a prior art architectural protocol block diagram.

FIGURE 4 is an architectural block diagram [functional block] illustrating exemplary architecture embodying the directory management of an embodiment of the present invention.

FIGURE 5 is a functional block illustrating detailed operation of the network ACL management of the present invention.

### DETAILED DESCRIPTION

The present invention is a management system and method for an enterprise network. The invention can provide security by integrating directory technology with router/gateway management and server management.

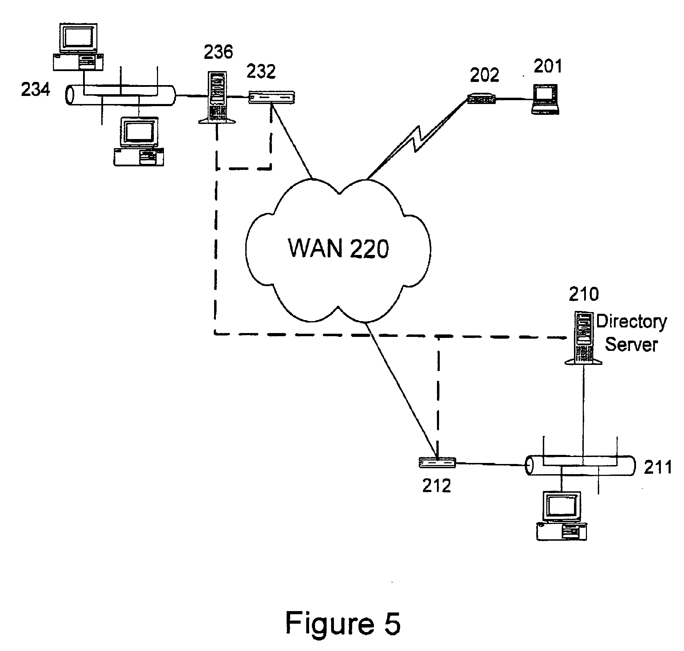

FIGURE 5 is a functional block diagram illustrating an exemplary architecture and topology of an enterprise network 90 according to the present invention. A master directory, preferably implemented with LDAP or other standards, is located on a server 92 at a central location on an enterprise network on a LAN 82. Distributed directories may be located, on remote servers 32 and 42 in the enterprise network. Master directory 92 and distributed directories contain objects and object attributes. The distributed directories may be synchronous with the master directory.

In the embodiment of the present invention, the objects may be individual's names, workstations, servers, and network routers/gateways. The individual's names may be the names of employees, vendors, or customers. The user attributes are preferably the IP address, location, password, and encryption keys. The user IP address contains the user location; the NetID field of the IP address identifies the LAN on which the user is located and therefore the location. The router/gateway attributes preferably are IP address, location, and router access list (RAL). The server attributes preferably are IP address, location, and the name of the user control file (UCF).

Relying on the user location designated by the address of the LAN to which the user is resident, the directory services will download the RALs to the router/gateway to allow or deny access for each user to the WAN 58, depending upon the access privileges of that user contained in the directory. For example, master directory 92 may contain the users of LAN 32, and the NetID of the users' TCP/IP addresses will designate that they are associated with router/gateway 36. The RAL for router/gateway 36 resides in master directory 92 and is downloaded through router/gateway 61 and WAN 58 into router/gateway 36. After this download, only the users of LAN 32 that have privileges to use WAN 58 as set in master directory 92 will be able to be forwarded by router/gateway 36 to WAN 58. Complete control of WAN 58 access is thereby controlled by directory entries.

To download the RAL to each router/gateway, a directory support application program (RAL-AP) is enabled. FIGURE 6 is a flow chart illustrating an exemplary method to determine the RAL for each router/gateway by a RAL-AP. The RAL-AP scans the master directory for router/gateway objects at 400. RAL-AP then determines then determines the IP subnet address from the router/gateways IP address at 401. At 402 the RAL-AP scans the directory and determines the router/gateway association of each user that is located in each subnet identified in 401. RAL-AP then generates the RALs for each router/gateway in the network at 403. In the embodiment of Figure 5, the RAL-AP would be an application associated with directory 92. The RAL-AP first pushes the RAL for router/gateway 61 by locating the IP address of the router/gateway 61 in the directory and pushes the data with the Telnet or LDAP protocol as illustrated in Figure 6 at 404. Using WAN 58, the RAL-AP pushes the RAL using the Telnet protocol to each respective router/gateway found in the directory. In the embodiment of Figure 5, router/gateways 46 and 36 would be similarly configured.

Similarly, user control files (UCFs) are attributes of servers in the directory. User privileges, set in the directory, define which servers each user can access. These UCFs are downloaded to each server in the directory structure. For example, server 45, resident on LAN 42, may contain the payroll records files, accounts receivable records files, and accounts payable records files all individually organized as logical servers inside physical server 45. Each of these logical servers will have a UCF associated with that server. The name of each logical server control file and the contents of that UCF are resident in master directory 92. Periodically, master directory 92 will reconstruct the individual server's UCF based on the latest user privileges defined in the master directory 92 and download that UCF to the appropriate server. Complete server access control is thereby controlled by directory entries.

To download the user control file to each server, a directory support application program (UCF-AP) is enabled. UCF-AP scans the directory, determines the server association of each user in the directory and generates the UCFs for each server in the network. In Figure 5, UCF-AP is an application in server 64. USF-AP first pushes the UCF for server 86 by locating the IP address of server 86 in the directory and pushes the data with the NetBios protocol. UCF-AP then pushes the UCF for firewall 62 using the FTP protocol. Using the WAN 58 the program pushes the UCF to each server in the directory.

Having described preferred embodiments, it should be apparent that modifications can be made without departing from the scope of the present invention.

It should be noted that the objects and advantages of the invention may be attained by means of any compatible combination(s) particularly pointed out in the items of the following summary of the invention and the appended claims.

### Summary of the invention

1. A master directory service for a wide area network (WAN), comprising:
   a wide area network;
   a plurality of local area networks (LAN) connected to the WAN through router/gateways;
   a directory connected to one or more LAN;
   a master directory having a directory of objects, including servers and router/gateways, the objects having attributes for indicating access right, connected to one of said plurality of LANS, said master directory distributing information to the directory of each LAN, said information indicating which of the users of each of the plurality of LANs connected to the WAN, allowed to have access to the WAN resources such as router/gateways, servers and workstations.
2. The WAN wherein the WAN is a data grade network.
3. The WAN wherein the WAN is an Internet that uses TCP/IP.
4. The WAN wherein the master directory periodically updates the attribute information of each directory of each LAN.
5. The WAN wherein the master directory updates the attribute information daily.
6. The WAN wherein the attribute information to each server includes a table associating names and source addresses, the server determining the name from the source address and determining whether access is to be allowed from the name associated with the source address.
7. The WAN wherein one or more LAN router/gateway(s) serves as a certification gateway for security.
8. The WAN wherein the certification conforms to X.509 standards.
9. The WAN wherein each directory and the master directory conforms to at least one of X.500 and LDAP standards.
10. The network where master directory information is requested by an application program running in the router/gateway.
11. The network wherein the each router/gateway serves as a certification security, certification conforms to X.509 standards, and each directory conforms to at least one of X.500 and LDAP standards.
12. The network wherein the master directory is a single master directory.
13. The network wherein the master directory is a distributed directory, distributed among local area networks.
14. A method for managing access in an enterprise network interconnected over a wide area network (WAN), the method comprising:
   maintaining a master directory with objects indicating servers and router/gateways, the objects having attributes indicating access rights to and/or from the object;
   providing to a router/gateway, which is in data communication with the WAN, information from the master directory indicating which clients on the enterprise network are allowed to access information over the WAN; and
   providing to a server, which is in data communication with the WAN, information from the master directory indicating which clients of the enterprise network are allowed to retrieve, store/ update information to/from the server.
15. The method wherein the providing steps are each performed periodically.
16. The method wherein the information from the master directory is provided to each router/gateway and server over the WAN.
17. The method wherein the enterprise network has a plurality of router/gateways and a plurality of servers in data communication with the WAN, the method including providing access information to each of the router/gateways and to each of the servers.
18. The method wherein the maintaining is performed in accordance with at least one of X.500 and LDAP standards.
19. A network comprising:
   a master directory having objects and attributes, the objects including router/gateways and the attributes for the router/gateways including a router/gateway access list (RAL); and
   a router/gateway connected to a group of users for providing access for the users to a wide area network (WAN), the router/gateway for receiving its respective RAL from the master directory and for using information in the RAL to determine whether one of the group of users will be allowed access to the WAN.
20. A network comprising:
   a master directory having objects and attributes, the objects including servers and the attributes for the servers including a user control file (UCF); and
   a number of servers connected to and accessible over a wide area network (WAN) for providing information to users over the WAN, each server receiving its respective UCF from the master directory and for using the UCF to determine whether a user will be allowed access to WAN resources, including router/gateways, servers and workstations.

## Claims

1. A master directory service for a wide area network (WAN), comprising:
a wide area network;
a plurality of local area networks (LAN) connected to the WAN through router/gateways;
a directory connected to one or more LAN;
a master directory having a directory of objects, including servers and router/gateways, the objects having attributes for indicating access right, connected to one of said plurality of LANS, said master directory distributing information to the directory of each LAN, said information indicating which of the users of each of the plurality of LANs connected to the WAN, allowed to have access to the WAN resources such as router/gateways, servers and workstations.

2. The WAN according to Claim 1, wherein the WAN is a data grade network.

3. The WAN according to Claim 1, wherein the WAN is an Internet that uses TCP/IP.

4. The WAN according to Claim 1, wherein the master directory periodically updates the attribute information of each directory of each LAN.

5. The WAN according to Claim 4, wherein the master directory updates the attribute information daily.

6. The WAN according to Claim 1, wherein the attribute information to each server includes a table associating names and source addresses, the server determining the name from the source address and determining whether access is to be allowed from the name associated with the source address,
and/or wherein preferably one or more LAN router/gateway(s) serves as a certification gateway for security,
and/or wherein preferably the certification conforms to X.509 standards,
and/or wherein preferably each directory and the master directory conforms to at least one of X.500 and LDAP standards,
and/or wherein preferably master directory information is requested by an application program running in the router/gateway,
and/or wherein preferably the each router/gateway serves as a certification security, certification conforms to X.509 standards, and each directory conforms to at least one of X.500 and LDAP standards,
and/or wherein preferably the master directory is a single master directory,
and/or wherein preferably the master directory is a distributed directory, distributed among local area networks.

7. A method for managing access in an enterprise network interconnected over a wide area network (WAN), the method comprising:
maintaining a master directory with objects indicating servers and router/gateways, the objects having attributes indicating access rights to and/or from the object;
providing to a router/gateway, which is in data communication with the WAN, information from the master directory indicating which clients on the enterprise network are allowed to access information over the WAN; and
providing to a server, which is in data communication with the WAN, information from the master directory indicating which clients of the enterprise network are allowed to retrieve, store/ update information to/from the server.

8. The method of claim 7, wherein the providing steps are each performed periodically,
and/or wherein preferably the information from the master directory is provided to each router/gateway and server over the WAN.
and/or wherein preferably the enterprise network has a plurality of router/gateways and a plurality of servers in data communication with the WAN, the method including providing access information to each of the router/gateways and to each of the servers.
and/or wherein preferably the maintaining is performed in accordance with at least one of X.500 and LDAP standards.

9. A network comprising:
a master directory having objects and attributes, the objects including router/gateways and the attributes for the router/gateways including a router/gateway access list (RAL); and
a router/gateway connected to a group of users for providing access for the users to a wide area network (WAN), the router/gateway for receiving its respective RAL from the master directory and for using information in the RAL to determine whether one of the group of users will be allowed access to the WAN.

10. A network comprising:
a master directory having objects and attributes, the objects including servers and the attributes for the servers including a user control file (UCF); and
a number of servers connected to and accessible over a wide area network (WAN) for providing information to users over the WAN, each server receiving its respective UCF from the master directory and for using the UCF to determine whether a user will be allowed access to WAN resources, including router/gateways, servers and workstations.
